# EUROPÄISCHE PATENTSCHRIFT

(11) **EP 3 042 055 B1**
(45) Veröffentlichungstag und Bekanntmachung des Hinweises auf die Patenterteilung: **07.06.2017**
(21) Anmeldenummer: 14755066.9
(22) Anmeldetag: 21.08.2014
(51) Int. Cl.: B62M 7/02, F01N 1/02, B62K 25/28, F01N 13/00

(54) **MOTORRAD UND MOTORRAD-HINTERRADSCHWINGE MIT INTEGRIERTEM RESONATOR**
MOTORCYCLE AND MOTORCYCLE REAR WHEEL SWINGARM WITH INTEGRATED RESONATOR
MOTOCYCLE ET BRAS OSCILLANT DE FOURCHE ARRIÈRE D'UN MOTOCYCLE AVEC RÉSONATEUR INTÉGRÉ

(30) Priorität: 02.09.2013 DE 102013217385
(43) Veröffentlichungstag der Anmeldung: 13.07.2016
(73) Patentinhaber: Bayerische Motoren Werke Aktiengesellschaft, 80809 München (DE)
(72) Erfinder: ALDENHOEVEL, Ralf, 86916 Kaufering (DE)
(86) Internationale Anmeldenummer: PCT/EP2014/067798
(87) Internationale Veröffentlichungsnummer: WO 2015/028379

(56) Entgegenhaltungen:
- EP-A1- 1 939 415
- DE-A1-102008 030 377
- US-A- 4 545 200
- US-A- 5 388 408
- US-A1- 2010 270 098

## Beschreibung

Die Erfindung betrifft eine Maßnahme zur Geräuschreduzierung bei Motorrädern. Hierfür wird ein Motorrad mit einem Motor und daran angeschlossenem Abgasrohr sowie einer Motorrad-Hinterradschwinge mit integriertem Resonator vorgesehen, der mit einem Abgasrohr in Verbindung steht.

Ähnliche Maßnahmen sind aus den Offenbarungen der US 2010/0270098 A1, US 4 545 200 A und aus der EP 1 939 415 A1 bekannt.

Aufgrund stetig strenger werdender Geräuschvorschriften für Motorräder, insbesondere des Verbrennungsmotors während dessen Betriebs, ist es notwendig, stets neue Maßnahmen zur Reduzierung der durch das Motorrad abgegebenen Lautstärke zu entwickeln. Grundsätzlich wird die Lautstärke durch den Endschalldämpfer begrenzt, jedoch müssten die Dämpfer-Volumina zukünftig ohne ergänzende Maßnahmen deutlich größer ausgebildet werden, um die Geräusch-Grenzwerte einhalten zu können. Ein größerer Endschalldämpfer ist jedoch aus zwei Gründen nicht erwünscht. Zum Einen zählen Endschalldämpfer an Motorrädern zu den wesentlichen designbildenden Bauteilen und dürfen daher eine vordefinierte Größe nicht überschreiten. Zum Zweiten führen größere Endschalldämpfer zu größerem Gewicht und höherem Bauraumbedarf, was bei Motorrädern in jedem Fall zu vermeiden ist.

Bei Automobilen ist zur Geräuschreduzierung die Verwendung von Resonatoren in Zusammenwirkung mit dem Abgasrohr aus dem Stand der Technik bekannt. Hierbei wird vorgesehen, dass an eine Abzweigung am Abgasrohr ein Blechkörper angebunden wird, der als Resonator wirkt. Eine derartige Lösung ist im Motorradbereich undenkbar, da die Anordnung eines zusätzlichen externen Resonators am Abgasrohr sowohl aus optischen als auch aus funktionalen Gesichtspunkten nicht freigabefähig wäre.

Vor diesem Hintergrund ist es Aufgabe der Erfindung, eine Möglichkeit bereitzustellen, das Geräuschniveau eines Motorrads während des Betriebs zu reduzieren, wobei die bisherigen Endschalldämpfer unverändert eingesetzt werden können.

Diese Aufgabe wird gelöst durch die Merkmale gemäß der Patentansprüche 1 und 10. Hierbei wird vorgeschlagen, dass die Motorrad-Hinterradschwinge einen geschlossenen Hohlraum aufweist, der über ein Verbindungselement mit dem Abgasrohr strömungsverbunden ist. Der in die Motorrad-Hinterradschwinge derart integrierte Hohlraum dient als Resonator, der das motorbedingte Geräuschniveau des Abgassystems um mindestens zwei Dezibel senken kann.

Die Motorrad-Hinterradschwinge ist günstigerweise als Hohlkammerprofil ausgebildet, vorzugsweise als Aluguss-Schweißkonstruktion, um die nötigen Anforderungen hinsichtlich Leichtbau erfüllen zu können. In einer solchen hohlen Motorrad-Hinterradschwinge wird ein vorbestimmter Bereich als geschlossener Hohlraum vorgesehen, der als akustischer Resonator wirkt. Der in die Schwinge integrierte Hohlraum stellt somit eine Resonanzkavität dar. Dabei ist besonders günstig, wenn der Hohlraum als Helmholtz-Resonator ausgebildet ist, der durch Schallwellen zu Eigenschwingungen angeregt wird, wenn die Frequenz eines Teiltons des Schalls im Abgasrohr mit der Eigenfrequenz der in ihm befindlichen Luftmenge übereinstimmt. Für jeden Motor und das jeweils zugehörige Abgassystem kann der erforderliche Frequenzbereich, bei dem der Resonator wirken soll, über die Anpassung des Hohlraumvolumens und der Länge sowie dem Durchmesser des Verbindungselements eingestellt werden. Der Resonator selbst wird hierbei nicht direkt mit heißem Abgas durchströmt, stattdessen schwingt eine stehende Luftsäule im Verbindungselement in Verbindung mit der Luftmenge im Resonator.

Als Verbindungselement wird in einer bevorzugten Ausführung ein temperaturbeständiger Schlauch verwendet, beispielsweise ein Metallflexschlauch oder ein temperaturbeständiger Elastomerschlauch. Das Verbindungselement ist vorzugsweise flexibel ausgebildet und kann Relativbewegungen der Schwinge zu dem Abgasrohr ausgleichen. Der Anschluss des Verbindungselements an den Hohlraum der Hinterradschwinge erfolgt günstigerweise möglichst ortsnah zur Schwingendrehachse, um die Relativbewegungen beim Ein- und Ausfedern zu minimieren.

Die Befestigung des Verbindungselements bzw. temperaturbeständigen Schlauches erfolgt sowohl an dem Hohlraum der Motorrad-Hinterradschwinge als auch an dem Abgasrohr mit jeweils daran ausgebildeten Stutzen, auf die der Schlauch aufschiebbar und mittels Befestigungsklemmen sicherbar bzw. befestigbar ist.

Eine günstige Wirkung des in die Hinterradschwinge integrierten Hohlraums bzw. Resonators wird erzielt, wenn das Verbindungselement bzw. der Schlauch an dem Abgasrohr in einer Abgasströmungsrichtung gesehen vor dem Endschalldämpfer und nach dem Katalysator angeschlossen ist. Dies ergibt sich konstruktiv auch durch die Erstreckung des Abgasrohres entlang der Hinterradschwinge, bevor dieses in den Endschalldämpfer mündet.

Zur Einstellbarkeit des Frequenzbereichs des als Resonator wirkenden Hohlraums weist dieser für gängige Motorräder ein Volumen von 1000 bis 3000 cm³, vorzugsweise 1800 bis 2600 cm³ auf. Die Länge des Verbindungselements beträgt in einer günstigen Ausführung 120 bis 250 mm, weiter bevorzugt 150 bis 200 mm. Der Durchmesser des Verbindungselements ist in einer günstigen Ausführung 30 bis 40 mm, weiter bevorzugt 30 bis 35 mm. Die jeweiligen Werte können variiert und angepasst werden, um auf das jeweilige System Motor, Abgasrohr und Endschalldämpfer bestmöglich schallreduzierend einwirken zu können.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht einer Motorrad-Hinterradschwinge;
- Fig. 2: eine seitliche Ansicht der Motorrad-Hinterradschwinge gemäß Fig. 1 teilweise aufgeschnitten; und
- Fig. 3: eine Vorderansicht der Motorrad-Hinterradschwinge aus Fig. 1 teilweise aufgeschnitten.

Die Figuren sind beispielhaft schematisch. Gleiche Bezugszeichen benennen gleiche Teile in allen Ansichten.

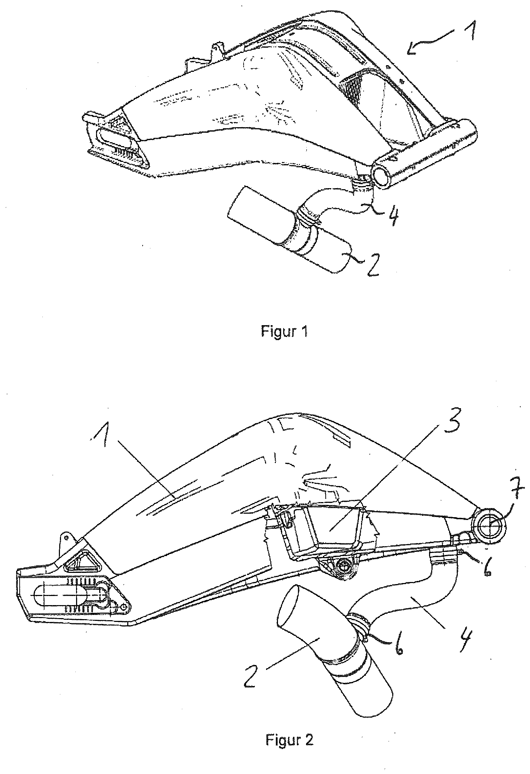

In Fig. 1 ist eine als Hohlkammerprofil ausgebildete Motorrad-Hinterradschwinge 1 mit seitlich beabstandet hierzu erstreckendem Abgasrohr 2 in einer perspektivischen Ansicht dargestellt. Von dem Abgasrohr 2 ist nur ein kurzer Abschnitt dargestellt, die weitere Erstreckung zum Endschalldämpfer bzw. Motor ist aus Übersichtlichkeitsgründen weggelassen. Von dem Abgasrohr 2 erstreckt sich ein temperaturbeständiger Schlauch 4 zur Motorrad-Hinterradschwinge und stellt eine Strömungsverbindung zwischen dem Abgasrohr 2 und einem Hohlraum 3 der Motorrad-Hinterradschwinge 1 bereit, so dass eine stehende Luftsäule bzw. Abgassäule im Verbindungselement in Verbindung mit der Luftmenge im Hohlraum 3 drehzahl- und lastabhängig schwingen kann.

Fig. 2 zeigt die Motorrad-Hinterradschwinge 1 aus Fig. 1 in einer seitlichen Ansicht, wobei der Bereich, der den geschlossenen Hohlraum 3 aufweist, teilweise aufgeschnitten dargestellt ist. Der Schlauch 4 ist an der Motorrad-Hinterradschwinge 1 bodenseitig unmittelbar angrenzend zu dem Schwingendrehpunkt 7 befestigt, da hier der die Relativbewegung gering ist. Der Hohlraum 3 ist als Helmholtz-Resonator ausgebildet, dessen geschlossener Hohlraum 3 (Kavität) im Wesentlichen eine Kastenform aufweist. Alternativ wäre auch die Ausbildung als Quader oder in gerundeter und insbesondere auch in runder Form möglich. Das gezeigte Volumen beträgt in etwa 2500 cm³, kann jedoch je nach Anordnung der Abgasanlage und in Abhängigkeit von dem gewünschten Frequenzspektrum verändert werden. Gleiches gilt für die Dimensionierung des Schlauches 4, dessen Länge und Durchmesser unmittelbar die Wirkung des Hohlraums 3 beeinflussen und in der gezeigten Ausführung in etwa 160 mm lang und 32 mm im Durchmesser sind.

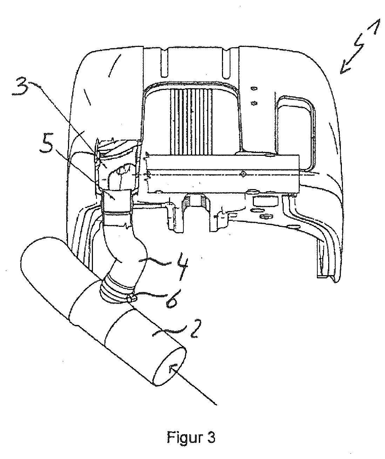

Fig. 3 zeigt die Ausführung aus Fig. 2 in einer Vorderansicht, wobei der Anschluss des Schlauches 4 an den Hohlraum 3 aufgeschnitten dargestellt ist. In Fig. 3 ist der an der Motorrad-Hinterradschwinge 1 im Bereich des Hohlraums 3 angeformte Stutzen 5 zu erkennen, auf dem der Schlauch 4 aufgeschoben und mittels einem Klemmband 6 gesichert ist. Eine entsprechende Anbindung ist auch an dem Abgasrohr 2 vorgesehen.

Die Erfindung beschränkt sich in ihrer Ausführung nicht auf die vorstehend angegebenen bevorzugten Ausführungsbeispiele. Vielmehr sind Varianten mitumfasst, welche von der dargestellten Lösung auch bei grundsätzlich anders gearteten Ausführungen Gebrauch macht. Beispielsweise kann die Anbindung des Verbindungselements an der Schwinge auch seitlich erfolgen.

## Patentansprüche

1. Motorrad umfassend einen Motor und ein daran angeschlossenes Abgasrohr (2) sowie eine Motorrad-Hinterradschwinge (1), **dadurch gekennzeichnet, dass** die Motorrad-Hinterradschwinge (1) einen geschlossenen Hohlraum (3) aufweist, der über ein Verbindungselement (4) mit dem Abgasrohr (2) strömungsverbunden ist und der als Helmholtz-Resonator ausgebildet ist.

2. Motorrad nach einem der vorigen Ansprüche, **dadurch gekennzeichnet, dass** die Motorrad-Hinterradschwinge (1) ein Hohlkammerprofil ist.

3. Motorrad nach einem der vorigen Ansprüche, **dadurch gekennzeichnet, dass** das Verbindungselement (4) ein temperaturbeständiger Schlauch ist.

4. Motorrad nach dem vorigen Anspruch, **dadurch gekennzeichnet, dass** das Verbindungselement (4) an einem jeweils an dem Hohlraum (3) und dem Abgasrohr (2) ausgebildeten Stutzen (5) befestigt ist.

5. Motorrad nach einem der vorigen Ansprüche, **dadurch gekennzeichnet, dass** das Verbindungselement (4) an dem Abgasrohr (2) in einer AbgasStrömungsrichtung gesehen vor einem Endschalldämpfer und nach einem Katalysator angeschlossen ist.

6. Motorrad nach einem der vorigen Ansprüche, **dadurch gekennzeichnet, dass** der Hohlraum (3) ein Volumen von 1000-3000 cm³ aufweist.

7. Motorrad nach einem der vorigen Ansprüche, **dadurch gekennzeichnet, dass** das Verbindungselement (4) eine Länge von 120-250 mm aufweist

8. Motorrad nach einem der vorigen Ansprüche, **dadurch gekennzeichnet, dass** das Verbindungselement (4) einen Durchmesser von 30-40 mm aufweist

9. Motorrad-Hinterradschwinge mit einem integrierten und als Helmholtz-Resonator ausgebildeten Hohlraum (3), der strömungsverbindbar mit einem Abgasrohr (2) ist.

## Claims

1. A motorcycle comprising an engine and an exhaust pipe (2) connected thereto and also a motorcycle rear swingarm (1), **characterised in that** the motorcycle rear swingarm (1) has a closed cavity (3) which is in a flow connection with the exhaust pipe (2) via a connecting element (4) and which is formed as a Helmholtz resonator.

2. A motorcycle according to one of the preceding claims, **characterised in that** the motorcycle rear swingarm (1) is a hollow-chamber profile.

3. A motorcycle according to one of the preceding claims, **characterised in that** the connecting element (4) is a temperature-resistant hose.

4. A motorcycle according to the preceding claim, **characterised in that** the connecting element (4) is fixed to a connecting piece (5) formed in each case on the cavity (3) and the exhaust pipe (2).

5. A motorcycle according to one of the preceding claims, **characterised in that** the connecting element (4) is connected to the exhaust pipe (2), viewed in an exhaust gas flow direction, before a rear silencer and after a catalytic converter.

6. A motorcycle according to one of the preceding claims, **characterised in that** the cavity (3) has a volume of 1000 - 3000 cm³.

7. A motorcycle according to one of the preceding claims, **characterised in that** the connecting element (4) has a length of 120 - 250 mm.

8. A motorcycle according to one of the preceding claims, **characterised in that** the connecting element (4) has a diameter of 30 - 40 mm.

9. A motorcycle rear swingarm with an integrated cavity (3) formed as a Helmholtz resonator which can be connected in a flow connection to an exhaust pipe (2).

## Revendications

1. Motocyclette comprenant un rotor et une tubulure de gaz d'échappement (2) connectée à ce moteur, ainsi qu'un bras oscillant de roue arrière (1),
**caractérisée en ce que**
le bras oscillant de roue arrière (1) de la motocyclette comporte une cavité fermée (3) qui est en liaison fluidique avec la tubulure de gaz d'échappement (2) par l'intermédiaire d'un élément de liaison (4) et est réalisée sous la forme d'un résonateur de Helmoltz.

2. Motocyclette conforme à la revendication précédente,
**caractérisée en ce que**
le bras oscillant de roue arrière (1) de la motocyclette est un profilé creux.

3. Motocyclette conforme à l'une des revendications précédentes, **caractérisée en ce que**
l'élément de liaison (4) est un tuyau résistant à la température.

4. Motocyclette conforme à la revendication précédente,
**caractérisée en ce que**
l'élément de liaison (4) est respectivement fixé à un support (5) formé sur la cavité (3) et la tubulure de gaz d'échappement (2).

5. Motocyclette conforme à l'une des revendications précédentes, **caractérisée en ce que**
dans la direction de circulation des gaz d'échappement, l'élément de liaison (4) est connecté à la tubulure de gaz d'échappement (2) en amont d'un amortisseur de bruit terminal et en aval d'un catalyseur.

6. Motocyclette conforme à l'une des revendications précédentes, **caractérisée en ce que**
la cavité (3) a un volume de 1000-3000 cm³.

7. Motocyclette conforme à l'une des revendications précédentes, **caractérisée en ce que**
l'élément de liaison (4) a une longueur de 120-250 mm.

8. Motocyclette conforme à l'une des revendications précédentes, **caractérisée en ce que**
l'élément de liaison (4) a un diamètre de 30-40 mm.

9. Bras oscillant de roue arrière de motocyclette dans lequel est intégrée une cavité (3) réalisée sous la forme d'un résonateur de Helmoltz pouvant être relié fluidiquement à une tubulure de gaz d'échappement (2).
